# Europäisches Patentamt
# European Patent Office
# Office européen des brevets

(11) Veröffentlichungsnummer : **0 166 295 B2**

(12) ## NEUE EUROPÄISCHE PATENTSCHRIFT

(45) Veröffentlichungstag der neuen Patentschrift :
**04.11.92 Patentblatt 92/45**

(51) Int. Cl.⁵ : **C08L 67/02,** // (C08L67/02,
55:02, 27:18)

(21) Anmeldenummer : **85107172.0**

(22) Anmeldetag : **11.06.85**

(54) **Thermoplastische Formmassen auf Basis von Polyalkylenterephthalat und Polymerisat sowie Verfahren zu ihrer Herstellung.**

(30) Priorität : **20.06.84 DE 3422862**

(43) Veröffentlichungstag der Anmeldung :
**02.01.86 Patentblatt 86/01**

(45) Bekanntmachung des Hinweises auf die
Patenterteilung :
**03.08.88 Patentblatt 88/31**

(45) Bekanntmachung des Hinweises auf die
Entscheidung über den Einspruch :
**04.11.92 Patentblatt 92/45**

(84) Benannte Vertragsstaaten :
**CH DE FR GB IT LI NL**

(56) Entgegenhaltungen :
EP-A- 50 265
EP-A- 162 382
CH-A- 645 658
DE-A- 1 694 217
DE-A- 1 729 158
DE-A- 1 794 036
DE-A- 2 248 242
DE-A- 2 348 377
DE-A- 2 444 584
DE-A- 2 819 533
GB-A- 1 558 874

(56) Entgegenhaltungen :
US-A- 3 723 373
US-A- 4 191 678
MODERN PLASTICS, März 1965, New York,
USA; S. BONOTTO et al. "Ionic ethylene interpolymers", Seiten 135-137,140,198
Römpps Chemie-Lexikon, 7. Auflage, Stuttgart
1975, S. 2762

(73) Patentinhaber : **BAYER AG**
**W-5090 Leverkusen 1 Bayerwerk (DE)**

(72) Erfinder : **Köhler, Karl-Heinz, Dr.**
**Buschstrasse 165**
**W-4150 Krefeld (DE)**
Erfinder : **Lindner, Christian, Dr.**
**Riehler Strasse 200**
**W-5000 Köln 60 (DE)**
Erfinder : **Rempel, Dieter, Dr.**
**Max-Beckmann-Strasse 35**
**W-5090 Leverkusen (DE)**
Erfinder : **Weber, Gunter, Dr.**
**Buschstrasse 169**
**W-4150 Krefeld (DE)**
Erfinder : **Ott, Karl-Heinz, Dr.**
**Paul-Klee-Strasse 54**
**W-5090 Leverkusen (DE)**
Erfinder : **Binsack, Rudolph, Dr.**
**Bethelstrasse 4a**
**W-4150 Krefeld (DE)**

Jouve, 18, rue Saint-Denis, 75001 PARIS

## Beschreibung

Die Erfindung betrifft thermoplastische Formmassen aus Polyalkylenterephthalat und Polymerisat mit einer Glasübergangstemperatur unter -30 °C, das teilweise aus fluoriertem Polyolefin besteht, sowie ein Verfahren zur Herstellung dieser Formmassen.

Formmassen auf Basis von Polyalkylenterephthalat und Polymerisat besitzen hervorragende Eigenschaften (US-PS 37 06 699, DE-OS 16 94 200 = US-PS 35 91659, US-PS 40 86 296, DE-OS 22 48 242 = US-PS 40 13 613 + 40 97 446, DE-PS 23 43 609 = US-PS 38 64 428, DE-OS 23 64 318 = US-PS 40 80 354, DE-PS 23 48 377 = US-PS 39 19 353, DE-PS 24 44 584 = US-PS 40 22 748, US-PS 41 11 892 und 42 57 929, DE-OS 27 26 256 = US-PS 40 96 202). In der Praxis hat sich aber gezeigt, dass in einigen Fällen die Formmassen höchsten Anforderungen nach hoher Zähigkeit nicht genügen, während in anderen Fällen durch den Polymerisatzusatz wertvolle Eigenschaften, wie z.B. Steifigkeit Wärmeformbeständigkeit und Härte, zu sehr beeinträchtigt werden.

Aufgrund der EP-A 162 382, Dokument gemäß Artikel 54 (3) EPÜ wurden die aromatischen Polycarbonate als zusätlicher Bestendteil für die Vertragsstaaten DE, FR, GB, IT, NL von den Ansprüchen ausgenommen.

EP-A 50 265 beschreibet Mischungen von Polyestern mit bestimmten Acrylatkautschuken, jedoch ohne Zusatz von fluorierten Polyolefinen.

DE-OS 17 29 158 beschreibt ein Verfahren zur Herstellung von Polyesterformkörpern, gegebenenfalls unter Zusatz von Polytetrafluorethylen bei erhöhter Temperatur und Druck.

Aufgabe der Erfindung war es nun, Formmassen hoher Zähigkeit auf Basis von Polyalkylenterephthalat bereitzustellen, in denen dennoch die bekannten guten Eigenschaften der Polyalkylenterephthalate weitgehend erhalten bleiben. Insbesondere waren Formmassen mit einer Kombination hoher Zähigkeit (auch bei tiefen Temperaturen), hohem Elastizitätsmodul und verbessertem Spannungs/Dehnungs-Verhalten erwünscht.

Überraschenderweise werden Mischungen aus Polyalkylenterephthalat und Polymerisat diesen hohen Anforderungen weitgehend gerecht, wenn das Polymerisat aus mindestens einem Polymerisat mit einer Glasübergangstemperatur unter -30 °C und fluoriertem Polyolefin, z.B. Polytetrafluorethylen, besteht.

Die Verwendung von fluorierten Polyolefinen als Zusatz zu Polyalkylenterephthalaten zur Verbesserung ihrer Eigenschaften, insbesondere zur Verbesserung der Kristallisationsgeschwindigkeit, des Tropfverhaltens im Brandfall, der Verschleissfestigkeit und der Verarbeitbarkeit, ist bekannt (DE-OS 16 94 217, 24 33 966, 24 52 329, DE-OS 26 15 071 = US-PS 41 91 678, DE-OS 26 55 162 = US-PS 40 02 581, DE-OS 31 31 781 = US-PS 43 37 192, EP-A 46 052, US-PS 37 23 373). Keine dieser Literaturstellen befasst sich mit der eingangs geschilderten Problemstellung, so dass sie zu deren Lösung auch keine Anregung geben konnten.

Gegenstand der Erfindung sind thermoplastische Formmassen aus

A. 65 bis 99 Gew.-%, bezogen auf die Summe A + B, Polyalkylenterephthalat und

B. 1 bis 35 Gew.-%, bezogen auf die Summe A + B, Polymerisat,

dadurch gekennzeichnet, dass das Polymerisat B aus mindestens einem Polymerisat mit einer Glasübergangstemperatur unter -30 °C, vorzugsweise unter -40 °C und - bezogen auf die Formmassen A + B - 0,1 bis 0,9, vorzugsweise 0,2 bis 0,8, insbesondere 0,3 bis 0,7 Gew.-% fluoriertem Polyolefin mit einer Glasübergangstemperatur von über -30°C besteht und durch Mischen wässiger Dispersionen des fluorierten Polyolefins und des Polymerisats sowie gemeinsame Fällung erhalten worden ist.

Die erfindungsgemässen Formmassen besitzen gegenüber solchen, die frei von fluoriertem Polyolefin sind, wesentlich höhere Zähigkeiten, insbesondere bei tiefer Temperatur, sowie deutlich erhöhte Elastizitätsmodule und wesentlich verbesserte Spannungs/Dehnungs- Eigenschaften.

Polyalkylenterepthalate A im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate A lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Carl Hanser Verlag, München, 1973).

Bevorzugte Polyalkylenterephthalate A enthalten mindestens 80, vorzugsweise mindestens 90 Mol.-%, bezogen auf die Dicarbonsäurekomponente, Terephthalsäurereste und mindestens 80, vorzugsweise mindestens 90 Mol:-%, bezogen auf die Diolkomponente, Ethylenglykol- und/oder Butandiol-1,4-reste.

Die bevorzugten Polyalkylenterephthalate A können neben Terephthalsäureresten bis zu 20 Mol.-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate A können neben Ethylenglykol- bzw. Butandiol-1,4-reste bis zu 20 Mol.-%, vorzugsweise bis zu 10 Mol.-%, anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol- 1,4, 3- Ethylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-β-hydroxyethoxyphenyl)-propan und 2,2-Bis-(4-hydroxypropoxyphenyl)-propan (DE-OS 24 07 674, 24 07 776, 27 15 932).

Die Polyalkylenterephthalate A können durch Einbau relativ kleiner Mengen 3- oder 4-wertiger Alkohole oder 3- oder 4-basischer Carbonsäuren, z.B. gemäss DE-OS 19 00 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate A, die allein aus Terephthalsäure und deren reaktionsfähigen Derivaten (z. B. deren Dialkylestern) und Ethylenglykol und/oder Butandiol-1,4 hergestellt worden sind, und Mischungen dieser Polyalkylenterephthalate.

Bevorzugte Mischungen enthalten 1 bis 50, vorzugsweise 1 bis 30 Gew.-% Polyethylenterephthalat und 50 bis 99, vorzugsweise 70 bis 99 Gew.-% Polybutylenterephthalat.

Die als Komponente A vorzugsweise verwendeten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o- Dichlorbenzol (1:1 Gewichtsteile) bei 25 °C im Ubbelode-Viskosimeter.

Die Polymerisate B mit einer Glasübergangstemperatur unter -30 °C sollen mit den Polyalkylenterephthalaten A bedingt unverträglich sein (also nicht zu makroskopischer Entmischung neigen), d.h. sie sollen in der Komponente A als diskrete Teilchen einer dispersen Phase mit einem mittleren Teilchendurchmesser von 0,1 bis 2,0 μm vorliegen, was sich durch elektronenmikroskopische Untersuchung feststellen lässt. Nicht « unverträglich » mit Komponente A sind also Produkte, die sich mit ihr einphasig mischen, wie z.B. Polyetherester (die zudem nicht unter den Begriff « Polymerisat » fallen).

Die Polymerisate B mit einer Glasübergangstemperatur unter -30 °C umfassen Copolymerisate - insbesondere Pfropfcopolymerisate - mit kautschukelastischen Eigenschaften, die im wesentlichen aus mindestens 2 der folgenden Monomeren erhältlich sind: Chloropren, Butadien-1,3, Isopren, Styrol, Acrylnitril, Ethylen, Propylen, Vinylacetat und (Meth)-Acrylsäureester mit 1 bis 18 C-Atomen in der Alkoholkomponente; also Polymerisate, wie sie z.B. in « Methoden der Organischen Chemie » (Houben-Weyl), Bd. 14/1, Georg Thieme Verlag, Stuttgart 1961, S. 393-406 und in C.B. Bucknall, « Toughened Plastics », Appl. Science Publishers, London 1977, beschrieben sind. Bevorzugte Polymerisate B sind mindestens partiell vernetzt und besitzen Gelgehalte von über 20, vorzugsweise über 40 Gew.-%, insbesondere über 60 Gew.-%.

Bevorzugte Polymerisate B sind Ethylen/Vinylacetat-Copolymerisate mit 15 bis 60 Gew.-% Vinylacetatresten und Schmelzindices von nicht fliessfähig bis 1000, vorzugsweise von 0,1 bis 20, gemessen bei 190 °C und 2,16 kg Belastung nach DIN 53 735.

Bevorzugte Polymerisate B sind z.B. auch die sogenannten EPM- bzw. EPDM-Kautschuke, in denen das Gewichtsverhältnis von Ethylen- zu Propylenresten im Bereich von 40:60 bis 65:35, liegt.

Die Mooney-Viskositäten (ML$_{1-4}$/100 °C) der EPM- bzw. EPDM-Kautschuke können zwischen 25 bis 200, vorzugsweise zwischen 35 bis 120, liegen.

Die verwendeten Ethylen/Propylen-Copolymerisate (EPM) besitzen praktisch keine Doppelbindungen, während die Ethylen/Propylen/Dien-Terpolymerisate (EPDM) 1 bis 20 Doppelbindungen/1000 C-Atome aufweisen können. Als geeignete Dien-monomere im EPDM seien beispielsweise genannt: konjugierte Diene, z.B. Isopren und Butadien-1,3, und nichtkonjugierte Diene mit 5 bis 25 C-Atome, z.B. 1,4-Pentadien, 1,4-Hexadien, 1,5-Hexadien, 2,5-Dimethyl- 1-1,5-hexadien und 1,4-Octadien; cyclische Diene, z.B. Cyclopentadien, Cyclohexadien, Cyclooctadien und Dicyclopentadien; Alkenylnorbornene, z.B. 5-Ethyliden-2-norbornen, 5-Butyliden-2-norbornen, 2-Metallyl-5-norbornen, 2-Isopropenyl-5-norbornen und Tricyclodiene.

Bevorzugt sind die nichtkonjugierten Diene Hexadien-1,5, Ethyliden-norbornen oder Dicyclopentadien. Der Diengehalt im EPDM beträgt vorzugsweise 0,5 bis 10 Gew.-%.

Derartige EPM- bzw. EPDM-Kautschuke sind z.B. in der DE-OS 28 08 709 beschrieben.

Bevorzugte Polymerisate B sind auch selektiv hydrierte Blockcopolymerisate eines vinylaromatischen Monomeren und eines konjugierten Diens. Diese Blockcopolymerisate sind bekannt. Im allgemeinen kann für die Herstellung der geeigneten Blockcopolymerisate aus Styrol, α-Methylstyrol, Vinyltoluol usw. und aus konjugierten Dienen, wie Butadien, Isopren usw., die für die Herstellung von Styrol- Dien- Blockcopolymerisaten verwendete Technologie benutzt werden, die in « Encyclopedia of Polymer Science and Technology », Bd. 15, Interscience, N.Y, (1971) auf den Seiten 508 ff. beschrieben ist. Die selektive Hydrierung kann auf an sich bekannte Weise durchgeführt werden, wobei die ethylenischen Doppelbindungen im wesentlichen vollständig hydriert werden, während die aromatischen Doppelbindungen im wesentlichen unbeeinflusst bleiben. Derartige selektiv hydrierte Blockcopolymerisate werden z.B. in der DE-OS 30 00 282 beschrieben.

Besonders bevorzugte Polymerisate B sind Pfropfpolymerisate.

Bevorzugte Pfropfpolymerisate B besitzen mittlere Teilchendurchmesser $d_{50}$ von 0,05 bis 1, vorzugsweise von 0,1 bis 0,8, insbesondere von 0,2 bis 0,6 $\mu$m.

Der mittlere Teilchendurchmesser $d_{50}$ ist der Durchmesser, oberhalb und unterhalb dessen jeweils 50 Gew.-% der Teilchen liegen. Er kann mittels Ultrazentrifugen- Messungen (W. Scholtan, H. Lange, Kolloid, Z. und Z. Polymere 250 (1972), 782-796) oder mittels Elektronenmikroskopie und anschliessende Teilchenauszählung (G. Kämpf, H. Schuster, Angew. Makromolekulare Chemie 14, (1970), 111-129) bestimmt werden.

Die Pfropfpolymerisate B sind vernetzt und haben Gelgehalte von mindestens 50 Gew.-%, vorzugsweise mindestens 80 Gew.-% und insbesondere von mindestens 90 Gew.-%, bezogen auf Pfropfpolymerisat B.

Der Gelgehalt der vernetzten Dienkautschuke wird bei 25 °C in Toluol, der Gelgehalt der vernetzten Acrylatkautschuke bei 25 °C in Dimethylformamid bestimmt (M. Hoffmann, H. Krömer, R. Kuhn, Polymeranalytik I und II, Georg Thieme Verlag Stuttgart 1977).

Bevorzugte Pfropfpolymerisate B sind Pfropfpolymerisate von 15 bis 60, vorzugsweise 20 bis 50, insbesondere 25 bis 40 Gew.-% wenigstens eines Vinyl- oder Vinylidenmonomeren aus der Reihe Styrol, $\alpha$-Methylstyrol, Acrylnitril, $C_1$-$C_8$-Alkylacrylat, $C_1$-$C_8$-Alkylmethacrylat, Hydroxy-$C_2$-$C_8$-alkyl(meth)acrylat, Epoxy-$C_2$-$C_8$-alkyl-(meth)acrylat auf 40 bis 85, vorzugsweise 50 bis 80, insbesondere 60 bis 75 Gew.-% teilchenförmigem vernetztem Dien- oder Acrylatkautschuk, jeweils bezogen auf Pfropfpolymerisat B.

Bevorzugte Pfropfmonomere sind Methylmethacrylat sowie Mischungen aus Styrol und Methylmethacrylat und Mischungen aus Styrol und Acrylnitril.

Bevorzugte Dienkautschuke sind vernetzte Homo- und/oder Copolymerisate aus konjugierten $C_4$-$C_6$ Dienen. Bevorzugtes Dien ist Butandien-1,3. Die Diencopolymerisate können neben den Dienresten bis zu 30 Gew.-%, bezogen auf Diencopolymerisat, Reste anderer ethylenisch ungesättigter Monomerer, wie z.B. Styrol, Acrylnitril, Ester der Acryl- oder Methacrylsäure mit einwertigen $C_1$-$C_4$-Alkoholen, wie z.B. Methacrylat, Ethylacrylat, Methylmethacrylat, Ethylmethacrylat enthalten.

Die Herstellung der Dienkautschuk-Pfropfgrundlage und der daraus hergestellten Pfropfpolymerisate wird z.B. in « Methoden der Organischen Chemie » (Houben-Weyl), Bd. 14/1. Georg Thieme Verlag, Stuttgart 1961, S. 393-406, sowie in Ullmanns Encyclopädie der technischen Chemie, 4. Auflage Bd. 19, Verlag Chemie, Weinheim, 1981, S. 279 bis 284 beschrieben.

Bevorzugte Pfropfgrundlagen auf Basis Acrylatkautschhuk sind Polymerisate, die durch Polymerisation von $C_1$-$C_8$-Alkylacrylaten erhalten werden. Die Polymerisate können auch Copolymerisate der Acrylsäureester mit bis zu 40 Gew.-%, bezogen auf Copolymerisat, anderer Vinylmonomerer, wie Styrol, Acrylnitril, Methylmethacrylat, Vinylester, Vinylether sein.

Die Acrylatkautschuke sind vernetzt.

Bevorzugte Beispiele für vernetzende Monomere mit mehr als einer copolymerisierbaren Doppelbindung sind Ester ungesättigter $C_3$-$C_{12}$-Monocarbonsäuren und ungesättigter einwertiger $C_2$-$C_{12}$-Alkohole oder gesättigter $C_2$-$C_{20}$-Polyole mit 2 bis 4 OH-Gruppen, wie z.B. mehrfach ungesättigte heterocyclische Verbindungen, wie Trivinyl-, Triallylcyanurat und - isocyanurat; insbesondere Triallylcyanurat; polyfunktionelle Vinylverbindungen, wie Di- und Trivinylbenzole; aber auch Triallylphosphat.

Bevorzugte vernetzende Monomere sind Allylmethacrylat, Ethylenglykoldimethacrylat, Diallylphthalat und heterocyclische Verbindungen, die mindestens drei copolymerisierbare ethylenisch ungesättigte Doppelbindungen aufweisen.

Besonders bevorzugte vernetzende Monomere sind die cyclischen Monomeren Triallylcyanurat, Triallylisocyanurat, Trivinylcyanurat, Tris-acryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf Kautschuk- Pfropfgrundlage.

Bei cyclischen, vernetzenden Monomeren mit mindestens drei ethylenisch ungesättigten Doppelbindungen ist es vorteilhaft, nicht mehr als 1 Gew.-%, bezogen auf Kautschuk-Pfropfgrundlage, zu verwenden.

Acrylatkautschuke können auch mehrschalige Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/ oder Acrylnitril, als Kern und anpolymerisiertes Acrylatmonomer als Schale enthalten.

Der Anteil des Polydien- Kerns in solchen mehrschaligen Kautschuken kann 0,1 bis 80, bevorzugt 10 bis 50 Gew.-% betragen. Schale(n) und Kern können unabhängig voneinander teilvernetzt oder hochvernetzt sein.

Bevorzugte gepfropfte Acrylatkautschuke sind solche, die

a) mit cyclischen trifunktionellen Comonomeren wie Triallylcyanurat und Triallylisocyanurat vernetzt sind (beschrieben in DE-OS 30 39 114);

b) einen Polybutadien - Kern enthalten (beschrieben in DE-OS 30 39 115);

c) hergestellt wurden « in Abwesenheit von Suspendiermittel » (beschrieben in DE-OS 3117 052).

Bei der Herstellung der Pfropfpolymerisate B durch Pfropfcopolymerisation, die üblicherweise in Gegenwart von Radikalstartern, z. B. wasserlöslichen Initiatoren, Emulgatoren oder Komplexbildnern/Pfropfaktivatoren sowie Reglern durchgeführt wird, bilden sich im allgemeinen neben dem eigentlichen Pfropfcopolymerisat in bestimmtem Ausmass auch freie Polymerisate bzw. Copolymerisate der die Pfropfhülle bildenden Pfropfmonomeren.

Pfropfpolymerisate B im Sinne der Erfindung sind deshalb durch Polymerisation von Pfropfmonomeren in Gegenwart des Kautschuklatex erhaltene Produkte, genau genommen also im allgemeinen ein Gemisch aus Pfropfcopolymerisat und freiem (Co)polymerisat der Pfropfmonomeren.

Die erfindungsgemässen Formmassen weisen optimale Eigenschaften auf, wenn die Menge an freiem (Co) Polymerisat 15 Gew.-%, vorzugsweise 10 Gew.-%, insbesondere 7 Gew.-%, bezogen auf Komponente B, nicht übersteigt. Der Staudinger-Index dieser freien (Co)polymerisate soll weniger als 0,6 dl/g, vorzugsweise weniger als 0,4 dl/g betragen, gemessen im Dimethylformamid bei 25 °C.

Bevorzugte gepfropfte Dienkautschuke sind z.B. in der DE-PS 2 348 377 und in den DE-OS 2 927 576, 3 025 605, bevorzugte gepfropfte Acrylatkautschuke, z.B. in der DE-PS 2 444 584 und in den DE-OS 2 726 256, 3 039 114, 3 039 115, 3 117 052 beschrieben.

Die fluorierten Polyolefine B sind hochmolekular und besitzen Glasübergangstemperaturen von über -30 °C, in der Regel von über 100 °C, Fluorgehalte von 59 bis 76, vorzugsweise 65 bis 76, insbesondere von 70 bis 76 Gew.-% und mittlere Teilchendurchmesser $d_{50}$ von 0,05 bis 2, vorzugsweise 0,08 bis 1, µm. Bevorzugte fluorierte Polyolefine B sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1952, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 47, Nr. 10 A, Oktober 1970, Mc Graw-Hill, Inc., New York, Seite 134, 138 und 774; "Modern Plastics Encyclopedia", 1975-1976, Oktober 1975, Band 52, Nr. 10 A, Mc Graw-Hill, Inc., New.York, Seite 27, 28 und 472, und US-PS 3 671 487, 3 723 373 und 3 838 092).

Die fluorierten Polyolefine B werden vorzugsweise in nicht gesinterter Form eingesetzt.

Mischungen wässriger Dispersionen des Polymerisats B mit einer Glasübergangstemperatur von unter -30 °C und des fluorierten Polyolefins werden gemeinsam gefällt, und können wie üblich aufgearbeitet werden, z.B. durch Sprühtrocknung, Gefriertrocknung oder Koagulation mittels Zusatz von anorganischen oder organischen Salzen, Säuren, Basen oder organischen, mit Wasser mischbaren Lösungsmitteln wie Alkoholen und Ketonen, vorzugsweise bei Temperaturen von 20-150 °C, insbesondere von 50-100 °C. Die Trocknung kann bei 50-200 °C, bevorzugt zwischen 70 °C und 150 °C erfolgen.

Das Gewichtsverhältnis von Polymerisat B mit einer Glasübergangstemperatur von unter -30 °C und dem fluorierten Polyolefin in der Dispersionsmischung kann 80:20 bis 99,9:0,1, insbesondere 90:10 bis 99:1 betragen.

Für diesen Zweck bevorzugte Dispersionen von fluoriertem Polyolefin B besitzen Feststoffgehalte von 30 bis 70, insbesondere von 50 bis 60, Gew.-%. Die in den Dispersionen vorliegenden mittleren Teilchendurchmesser $d_{50}$ liegen vorzugsweise bei 0,05 bis 0,8, insbesondere 0,1 bis 0,5 µm.

Als Variante kann man einen Teil des Polymerisats B mit einer Glasübergangstemperatur von unter -30°C und das fluorierte Polyolefin B gemeinsam das gemeinsam gefällte Produkt B mit fällen und weiteren Polymerisat B mit einer Glasübergangstemperatur unter -30 °C (das frei von fluoriertem Polyolefin B ist) kombinieren. So kann man nach dieser Variante z.B.

a) 25 bis 75, vorzugsweise 40 bis 60, Gewichtsteile Polymerisat B mit einer Glasübergangstemperatur unter -30 °C und fluoriertes Polyolefin B, die aus Mischung wässriger Dispersionen beider Polymeren gemeinsam gefällt worden sind,

b) 75 bis 25, vorzugsweise 60 bis 40, Gewichtsteile Polymerisat B mit einer Glasübergangstemperatur unter - 30 °C (das frei von fluoriertem Polyolefin B ist) und gegebenenfalls

Die erfindungsgemässen Formmassen können übliche Additive, wie Gleit- und Entformungsmittel, Nukleiermittel, Stabilisatoren, Füll- und Verstärkungsstoffe, Flammschutzmittel sowie Farbstoffe enthalten.

Die gefüllten bzw. verstärkten Formmassen können bis zu 60, vorzugsweise 10 bis 60 Gew.-%, bezogen auf die gefüllte bzw. verstärkte Formmasse, Füll- und/oder Verstärkungsstoffe enthalten. Bevorzugte Verstärkungsstoffe sind Glasfasern. Bevorzugte Füllstoffe die auch verstärkend wirken können, sind Glaskugeln, Glimmer, Silikate, Quarz, Talkum, Titandioxid, Wollastonit.

Die mit Flammschutzmitteln ausgerüsteten Formmassen enthalten Flammschutzmittel in einer Konzentration von im allgemeinen von 3 bis 15 Gew.-%, bezogen auf die flammgeschützten Formmassen.

Es kommen alle bekannten Flammschutzmittel in Frage, wie z.B. Polyhalogendiphenyl, Polyhalogendiphenylether, Polyhalogenphthalsäure und ihre Derivate und Polyhalogenoligo- und -polycarbonate, wobei die entsprechenden Bromverbindungen besonders wirksam sind. Ausserdem enthalten sie in der Regel einen Synergisten, wie z.B. Antimontrioxid.

Die erfindungsgemässen Formmassen enthalten vorzugsweise keine Flammschutzmittel, insbesondere keine halogenierten Polymeren (natürlich ausgenommen die fluorierten Polyolefine der Komponente B); "keine" in diesem Sinne bedeutet, keine Mengen wie sie für den Flammschutz allgemein üblich sind, d.h. mehr als 1 Gew.-%, bezogen auf die Komponenten A+ B.

Die Herstellung der Mischungen aus thermoplastischem Polyester A, Polymerisat B sowie gegebenenfalls weiterer Komponenten kann in den üblichen Mischaggregaten, wie Walzen, Knetern, Ein- und Mehrwellenextrudern, erfolgen. Die Temperatur bei der Herstellung der Mischungen sollte mindestens 10 °C und zweckmässig höchstens 90 °C oberhalb des Schmelzpunktes des Polyesters liegen.

Das erfindungsgemässe Verfahren kann diskontinuierlich oder kontinuierlich unter Bedingungen, bei denen eine Oxidation weitgehend ausgeschlossen ist, d.h. unter inertem Schutzgas wie Stickstoff, Kohlendioxid, Argon oder Helium und/oder vermindertem Druck, durchgeführt werden. Geeignet sind alle Apparate, die solche Bedingungen ermöglichen.

Die aus den erfindungsgemässen Formmassen durch Spritzguss oder Extrusion hergestellten formkörper eignen sich besonders dort, wo mit hohen Stossbelastungen gerechnet werden muss. z.B. im Kfz-Bereich für Stossfänger, Spoiler, Rammleisten, Karosserieteile, Lenkräder, Lenkradsäulen.

Die in den nachfolgenden Beispielen genannten Teile sind Gewichsteile. Prozentangaben beziehen sich auf das Gewicht.

Beispiele

A. Verwendete Komponenten:

1. Polybutylenterephthalat mit einer Intrinsic-Viskosität von 1,20 dl/g, gemessen in Phenol o-Dichlorbenzol (Gew.-Verhältnis 1:1) bei 25 °C im Ubbelohde-Viskosimeter.
2. Pfropfpolymerisat aus 75 Gew.-% Polybutadien-Pfropfgrundlage (Gelgehalt 85 Gew.-%) und 25 Gew.-% Pfropfauflage aus 72 Gewichtsteilen Styrol und 28 Gewichsteilen Acrylnitril mit einem mittleren Teilchendurchmesser $d_{50}$ von 0,4 μm, hergestellt nach EP-A 22 216.
3. Pfropfpolymerisat aus 71,25 Gew.-% Poly utadien-Pfropfgrundlage (Gelgehalt: 85 Gew.- %), 23,75 Gew.-% Pfropfauflage aus 72 Gewichtsteilen Styrol und 28 Gewichtsteilen Acrylnitril, gemeinsam gefällt mit 5 Gew.-% Polytetrafluorethylen.
4. Wässrige Dispersion von Polytetrafluorethylen (Feststoffgehalt: 60 Gew.-%; Fluorgehalt: 73 Gew.-% bezogen auf Feststoff).
5. Verarbeitungshilfsmittel/Stabilisatoren.

B. Herstellung der Formmassen

1. Herstellung der Komponente A3:
100 Gewichsteile einer 40 Gew.-%igen wässrigen Dispersion des Pfropfpolymerisats A.2 und 3,5 Gewichsteile einer 60 gew.-%igen Polytetrafluorethylen-Dispersion wurden gemischt und mit 1,8 Gew.-%, bezogen auf Polymerfeststoff, phenolischer Antioxydantien stabilisiert.
Bei 85-95°C wurde die Mischung mit einer vvässrigen Lösung von Magnesiumsulfat (Bittersalz) und Essigsäure bei pH 4-5 koaguliert, filtriert und bis zur Elektrolytfreiheit gewaschen, anschliessend durch Zentrifugieren von der Hauptmenge Wasser befreit und danach bei 100 °C zu einem Pulver getrocknet.
2. Weiterverarbeitung des Produkts der gemeinsamen Fällung:
Die pulvrige Komponente A3 wurde mit den Komponenten A1 und A6 sowie gegebenenfalls A2 und gegebenenfalls A5 in der Schmelze vermischt und extrudiert. Die Massetemperaturen betrugen 270 bis 280 °C. Der Schmelzestrang wurde vor dem Austritt aus der Düse entgast, dann in Wasser gekühlt, granuliert und getrocknet.
Die Zusammensetzung der Formmassen ergibt sich aus Tabelle 1.
Die Formmassen wurden nach Vortrocknung auf einer üblichen Spritzgussmachine bei Massetemperaturen von 250 bis 260 °C und einer Formtemperatur von 80 °C zu Norm-Prüfstäben verspritzt. Die Untersuchungsergebnisse sind in Tabelle 2 aufgeführt.

Tabelle 1

Zusammensetzung der Formmassen [Gew.-%]

| Komponente | Bezeichnung | 1[1] | 2 | 3 | 4 | 5[1] |
|---|---|---|---|---|---|---|
| PBT | A1 | 76,6 | 76,6 | 76,6 | 76,6 | 76,7 |
| Pfropfpolymerisat | A2 | – | 7 | 13 | 19 | 23 |
| Pfropfpolymerisat | A3 | 23 | 16 | 10 | 4 | |
| Hilfsmittel | A5 | 0,4 | 0,4 | 0,4 | 0,4 | 0,4 |
| Gesamtgehalt an Polytetrafluorethylen | | 1,15 | 0,8 | 0,5 | 0,2 | – |

[1]Vergleichsbeispiel

Tabelle 2

Eigenschaften der Norm-Prüfstäbe

| | | 1[1] | 2 | 3 | 4 | 5[1] |
|---|---|---|---|---|---|---|
| [2]Schlag-zähigkeit $a_n$ | $(kJ/m^2)$ | 80 | 80 | 77 | 73 | 72 |
| [2]Kerbschlag-zähigkeit $a_k$ | $(kJ/m^2)$ | | | | | |
| R.T. | | 47 | 52 | 53 | 44 | 39 |
| 0 °C | | 40 | 49 | 52 | 42 | 36 |
| $-10$ °C | | 31 | 44 | 50 | 39 | 35 |
| $-20$ °C | | 13 | 37 | 45 | 34 | 13 |
| $-30$ °C | | 10 | 18 | 40 | 17 | 13 |
| [3]Zug-E-Modul | (MPa) | 2050 | 2178 | 2250 | 2195 | 1790 |
| [4]$\sigma B$ | (MPa) | 42 | 43 | 43 | 44 | 38 |
| [4]$\sigma R$ | (MPa) | 40 | 39 | 44 | 42 | 26 |
| [4]$\varepsilon R$ | (%) | 215 | 260 | 256 | 276 | 119 |

[1]Vergleichs-Versuch  [2]nach DIN 53 453
[3]nach DIN 53 457  [4]nach DIN 53 455

**Patentansprüche**

**Patentansprüche für folgende Vertragsstaaten : DE, FR, GB, IT, NL**

1. Thermoplastische Formmasse aus
   A. 65 bis 99 Gew.-% bezogen auf die Summe A + B, Polyalkylenterephthalat und
   B. 1 bis 35 Gew.-%. bezogen auf die Summe A ÷ B. Polymerisat (erhalten durch Polymerisation von Verbindungen, deren Moleküle reaktionsfähige Doppelbindungen enthalten),
   dadurch gekennzeichnet, dass das Polymerisat B aus mindestens einem Polymerisat mit einer Glasübergangstemperatur unter -30 °C und - bezogen auf die Formmasse A ÷ B - 0.1 bis 0.9 Gew.-% fluoriertem Polyolefin mit einer Glasübergangstemperatur von über -30°C besteht und durch Mischen wäßriger Dispersionen des fluorierten Polyolefins und des Polymerisats sowie gemeinsame Fällung erhalten worden ist, wobei die thermoplastische Formmasse als zusätzlichen Bestandteil keine aromatischen Polycarbonate enthalten soll.

2. Formmasse nach Anspruch 1, dadurch gekennzeichnet, dass das Polymerisat B aus mindestens einem Polymerisat mit einer Glasübergangstemperatur unter -40°C und - bezogen auf die Formmasse A ÷ B -

0,1 bis 0,9 Gew.-% fluoriertem Polyolefin besteht.

3. Formmasse nach Ansprüchen 1 und 2, dadurch gekennzeichnet, dass sie - bezogen auf die Formmasse A ÷ B - 0,2 bis 0,8 Gew.-% fluoriertes Polyolefin enthält.

4. Formmasse nach Ansprüchen 1 und 3, dadurch gekennzeichnet, dass sie - bezogen auf die Formmasse A ÷ B - 0,3 bis 0,7 Gew.-% fluoriertes Polyolefin enthält.

5. Formmasse nach Ansprüchen 1 und 4, dadurch gekennzeichnet, dass das fluorierte Polyolefin Polytetrafluorethylen ist.

6. Formmasse nach Ansprüchen 1 und 5, dadurch gekennzeichnet, dass sie 10 bis 60 Gew.-% bezogen auf gefüllte bzw. verstärkte Formmasse. Füll- und/oder Verstärkungsstoffe enthält.

7. Verfahren zur Herstellung der Formmassen nach Ansprüchen 1 bis 6 dadurch gekennzeichnet, dass man die Komponenten in der Schmelze mischt.

**Patentansprüche für folgende Vertragsstaaten : CH, LI**

1. Thermoplastische Formmasse aus
   A. 65 bis 99 Gew.-%, bezogen auf die Summe A + B, Polyalkylenterephthalat und
   B. 1 bis 35 Gew.-% bezogen auf die Summe A ÷ B, Polymerisat (erhalten durch Polymerisation von Verbindungen, deren Moleküle reaktionsfähige Doppelbindungen enthalten),
   dadurch gekennzeichnet, dass das Polymerisat B aus mindestens einem Polymerisat mit einer Glasübergangstemperatur unter - 30°C und - bezogen auf die Formmasse A ÷ B -0,1 bis 0,9 Gew.-% fluoriertem Polyolefin mit einer Glasübergangstemperatur von über -30°C besteht und durch Mischen wäßriger Dispersionen des fluorierten Polyolefins und des Polymerisats sowie gemeinsame Fällung erhalten worden ist.

2. Formmasse nach Anspruch 1, dadurch gekennzeichnet, dass das Polymerisat B aus mindestens einem Polymerisat mit einer Glasübergangstemperatur unter -40°C und - bezogen auf die Formmasse A ÷ B - 0,1 bis 0,9 Gew.-% fluoriertem Polyolefin besteht.

3. Formmasse nach Ansprüchen 1 und 2, dadurch gekennzeichnet, dass sie - bezogen auf die Formmasse A ÷ B - 0,2 bis 0,8 Gew.-% fluoriertes Polyolefin enthält.

4. Formmasse nach Ansprüchen 1 bis 3, dadurch gekennzeichnet, dass sie - bezogen auf die Formmasse A ÷ B - 0,3 bis 0,7 Gew.-% fluoriertes Polyolefin enthält.

5. Formmasse nach Ansprüchen 1 bis 4, dadurch gekennzeichnet, dass das fluorierte Polyolefin Polytetrafluorethylen ist.

6. Formmasse nach Ansprüchen 1 bis 5, dadurch gekennzeichnet, dass sie 10 bis 60 Gew.-% bezogen auf gefüllte bzw. verstärkte Formmasse Füll- und/oder Verstärkungsstoffe enthält.

7. Verfahren zur Herstellung der Formmassen nach Ansprüchen 1 bis 6 dadurch gekennzeichnet, dass man die Komponenten in der Schmelze mischt.

**Claims**

**Claims for the following Contracting States : CH, LI**

1. A thermoplastic moulding compound of
   A. 65 to 99% by weight, based on the sum of A + B, polyalkylene terephthalate and
   B. 1 to 35% by weight, based on the sum of A + B, polymer (obtained by polymerization of compounds of which the molecules contain reactive double bonds),
   characterized in that the polymer B consists of at least one polymer having a glass transition temperature below - 30°C and, based on the moulding compound A + B, 0.1 to 0.9% by weight fluorinated

EP 0 166 295 B2

polyolefin having a glass transition temperature above -30°C and has been obtained by mixing of aqueous dispersions of the fluorinated polyolefin and the polymer and co-precipitation.

2. A moulding compound as claimed in claim 1, characterized in that the polymer B consists of at least one polymer having a glass transition temperature below -40°C and, based on the moulding compound A + B, 0.1 to 0.9% by weight fluorinated polyolefin.

3. A moulding compound as claimed in claims 1 and 2, characterized in that it contains 0.2 to 0.8% by weight, based on the moulding compound A + B, fluorinated polyolefin.

4. A moulding compound as claimed in claims 1 to 3, characterized in that it contains 0.3 to 0.7% by weight, based on the moulding compound A + B, fluorinated polyolefin.

5. A moulding compound as claimed in claims 1 to 4, characterized in that the fluorinated polyolefin is polytetrafluoroethylene.

6. A moulding compound as claimed in claims 1 to 5, characterized in that it contains 10 to 60% by weight, based on the filled or reinforced moulding compound, fillers and/or reinforcing materials.

7. A process for the production of the moulding compounds claimed in claims 1 to 6, characterized in that the components are mixed in the melt.

**Claims for the following Contracting States : DE, FR, GB, IT, NL**

1. A thermoplastic moulding compound of
   A. 65 to 99% by weight, based on the sum of A + B, polyalkylene terephthalate and
   B. 1 to 35% by weight, based on the sum of A + B, polymer (obtained by polymerization of compounds of which the molecules contain reactive double bonds),
   characterized in that the polymer B consists of at least one polymer having a glass transition temperature below - 30°C and, based on the moulding compound A + B, 0.1 to 0.9% by weight fluorinated polyolefin having a glass transition temperature above -30°C and has been obtained by mixing of aqueous dispersions of the fluorinated polyolefin and the polymer and co-precipitation, the thermoplastic moulding compound containing no aromatic polycarbonates as an additional component.

2. A moulding compound as claimed in claim 1, characterized in that the polymer B consists of at least one polymer having a glass transition temperature below -40°C and, based on the moulding compound A + B, 0.1 to 0.9% by weight fluorinated polyolefin.

3. A moulding compound as claimed in claims 1 and 2, characterized in that it contains 0.2 to 0.8% by weight, based on the moulding compound A + B, fluorinated polyolefin.

4. A moulding compound as claimed in claims 1 to 3, characterized in that it contains 0.3 to 0.7% by weight, based on the moulding compound A + B, fluorinated polyolefin.

5. A moulding compound as claimed in claims 1 to 4, characterized in that the fluorinated polyolefin is polytetrafluoroethylene.

6. A moulding compound as claimed in claims 1 to 5, characterized in that it contains 10 to 60% by weight, based on the filled or reinforced moulding compound, fillers and/or reinforcing materials.

7. A process for the production of the moulding compounds claimed in claims 1 to 6, characterized in that the components are mixed in the melt.

**Revendications**

**Revendications pour les Etats contractants suivants :CH, LI**

1. Matière moulable thermoplastique de
   A. 65 à 99 % en poids de téréphtalate de polyalkylène, par rapport à la somme A + B, et

B. 1 à 35 % en poids, par rapport à la somme A + b, d'un polymère (obtenu par polymérisation de composés dont les molécules contiennent des doubles liaisons réactives),

caractérisée en ce que le polymère B consiste en au moins un polymère ayant une température de transition vitreuse inférieure à -30°C et 0,1 à 0,9 % en poids, par rapport à la matière moulable A + B, d'une polyoléfine fluorée ayant une température de transition vitreuse supérieure à -30°C et a été obtenu par mélange de dispersions aqueuses de la polyoléfine fluorée et du polymère et précipitation simultanée.

2. Matière moulable selon la revendication 1, caractérisée en ce que le polymère B consiste en au moins un polymère ayant une température de transition vitreuse inférieure à -40°C et 0,1 à 0,9 % en poids de polyoléfine fluorée, par rapport à la matière moulable A + B.

3. Matière moulable selon les revendications 1 et 2, caractérisée en ce qu'elle contient 0,2 à 0,8 % en poids de polyoléfine fluorée, par rapport à la matière moulable A + B.

4. Matière moulable selon les revendications 1 à 3, caractérisée en ce qu'elle contient 0,3 à 0,7 % en poids de polyoléfine fluorée, par rapport à la matière moulable A + B.

5. Matière moulable selon les revendications 1 à 4, caractérisée en ce que la polyoléfine fluorée est du polytétrafluoroéthylène.

6. Matière moulable selon les revendications 1 à 5, caractérisée en ce qu'elle contient 10 à 60 % en poids de matières de charge et/ou de renforcement, par rapport à la matière moulable chargée ou renforcée.

7. Procédé pour la fabrication des matières moulables selon les revendications 1 à 6, caractérisé en ce que l'on mélange les composants à l'état fondu.

**Revendications pour les Etats contractants suivants : DE, FR, GB, IT, NL**

1. Matière moulable thermoplastique de

A. 65 à 99 % en poids de téréphtalate de polyalkylène, par rapport à la somme A + B, et

B. 1 à 35 % en poids, par rapport à la somme A + b, d'un polymère (obtenu par polymérisation de composés dont les molécules contiennent des doubles liaisons réactives), caractérisée en ce que le polymère B consiste en au moins un polymère ayant une température de transition vitreuse inférieure à -30°C et 0,1 à 0,9 % en poids, par rapport à la matière moulable A + B, d'une polyoléfine fluorée ayant une température de transition vitreuse supérieure à -30°C et a été obtenu par mélange de dispersions aqueuses de la polyoléfine fluorée et du polymère et précipitation simultanée, la matière moulable ne devant pas contenir de polycarbonates aromatiques comme constituant supplémentaire.

2. Matière moulable selon la revendication 1, caractérisée en ce que le polymère B consiste en au moins un polymère ayant une température de transition vitreuse inférieure à -40°C et 0,1 à 0,9 % en poids de polyoléfine fluorée, par rapport à la matière moulable A + B.

3. Matière moulable selon les revendications 1 et 2, caractérisée en ce qu'elle contient 0,2 à 0,8 % en poids de polyoléfine fluorée, par rapport à la matière moulable A + B.

4. Matière moulable selon les revendications 1 à 3, caractérisée en ce qu'elle contient 0,3 à 0,7 % en poids de polyoléfine fluorée, par rapport à la matière moulable A + B.

5. Matière moulable selon les revendications 1 à 4, caractérisée en ce que la polyoléfine fluorée est du polytétrafluoroéthylène.

6. Matière moulable selon les revendications 1 à 5, caractérisée en ce qu'elle contient 10 à 60 % en poids de matières de charge et/ou de renforcement, par rapport à la matière moulable chargée ou renforcée.

7. Procédé pour la fabrication des matières moulables selon les revendications 1 à 6, caractérisé en ce que l'on mélange les composants à l'état fondu.